# EUROPEAN PATENT SPECIFICATION

(11) **EP 2 883 439 B1**
(45) Date of publication and mention of the grant of the patent: **17.03.2021**
(21) Application number: 14190200.7
(22) Date of filing: 24.10.2014
(51) Int. Cl.: A01D 41/14, A01D 57/20

(54) **Harvesting head**
Erntekopf
Tête de récolte

(30) Priority: 11.12.2013 US 201314103279
(43) Date of publication of application: 17.06.2015
(73) Proprietor: Deere & Company, Moline, IL 61265 (US)
(72) Inventor: Mossman, Michael W, Silvis, IL Illinois 61282 (US)
(74) Representative: Holst, Sönke

(56) References cited:
- EP-A1- 1 915 897
- EP-A1- 2 586 288

## Description

### Field of the invention

The invention relates to agricultural harvesting equipment. More particularly, it relates to agricultural harvesting heads. Even more particularly it relates to feed systems for agricultural harvesting heads.

### Background of the Invention

Harvesting heads of the draper type use endless belt conveyors to move crop material inwardly from the ends of the harvesting head to a central region of the harvesting head, and then rearwardly from a central region, underneath a feed roller, and then through an aperture in the back of the harvesting head and into a feederhouse that extends forward from the agricultural combine on which the agricultural harvesting head is mounted. Such a harvesting head is described for example in EP 1 915 897 A1, considered as generic.

The feed roller engages the top surface of the crop mat being fed rearward from the two side conveyors. Several adaptations of been tried over the years, including fingers fixed to the outside surface of the feed roller, fingers that extend and retract into the feed roller based upon its rotational position, and fingers that extend and retract into the feed roller disposed at an angle to sweep in material from the outer ends of the feed roller.

None of these have been completely satisfactory.

What is needed therefore is an improved feed system for harvesting head. It is an object of this invention to provide such a system.

### Summary of the Invention

An agricultural harvesting head is provided that comprises: a frame that extends laterally and is elongate; a left side conveyor that is supported on a left side of the frame and is configured to carry cut crop material laterally from a left side of the frame to a central region of the frame; a right side conveyor that is supported on a right side of the frame and is configured to carry cut crop material laterally from a right side of the frame to the central region of the frame; a center conveyor that is disposed to receive cut crop material from the left side conveyor and from the right side conveyor and to convey the cut crop material rearwardly, wherein the center conveyor is supported on the central region of the frame; and an upper conveyor of the endless belt type that is disposed above the center conveyor and disposed to receive, engage and downwardly compress an upper surface of the cut crop material conveyed rearwardly by the center conveyor.

The left side conveyor, and the right side conveyor may be of the endless belt type.

The agricultural harvesting head may further comprise a left side diverter roller disposed adjacent to the left front of the upper conveyor to deflect cut crop material from the left side conveyor onto the center conveyor, and further comprising a right side diverter roller disposed adjacent to the right front of the upper conveyor to deflect cut crop material from the right side conveyor on to the center conveyor.

The upper conveyor comprises an endless belt, and the endless belt of the upper conveyor may have a generally vertical belt portion that is configured to engage an upper portion of a mat of the cut crop material and draw the mat downward.

The endless belt of the upper conveyor may have a downwardly and rearwardly moving belt portion that is configured to receive the mat of cut crop material from the generally vertical belt portion and to further compress the mat of cut crop material as the endless belt of the upper conveyor draws the mat downward and rearward.

The center conveyor may comprise an endless belt, the endless belt may be configured to compress the mat of cut crop material between the downwardly and rearwardly moving belt portion and the endless belt of the center conveyor as both the upper conveyor and the center conveyor are driven toward the rear of the harvesting head.

A rearmost roller of the center conveyor and a rearmost roller of the upper conveyor may be disposed at the rear of an inside the frame of the agricultural harvesting head.

An endless belt of the upper conveyor may have three regions, including a first region that is generally vertical, a second region that extends downwardly and rearwardly, and a third region that extends generally horizontally, and these three regions may be defined by a plurality of conveyor rollers about which the endless belt of the upper conveyor is wrapped.

The left side diverter roller and the right side diverter roller may each comprise an elongate body that is generally cylindrical and extends vertically, and a plurality of longitudinally extending ribs that are fixed to and extend outward from an outer surface of the body.

The left side diverter roller and the right side diverter roller may further comprise a plurality of elongate protrusions extending outward from a lower portion of the elongate body.

### Embodiment

An embodiment of the invention is shown in the drawings, in which:
Figure 1 is a perspective view of a harvesting head in accordance with the present invention.
Figure 2 is a detailed fragmentary perspective view of a central region of the harvesting head of Figure 1 taken from the same perspective.
Figure 3 is a detailed fragmentary cross sectional perspective view through a central region of the harvesting head of Figures 1-2 taken at section line 3-3 in Figure 1.
Figure 4 is a left side view of the cross section of Figure 3.

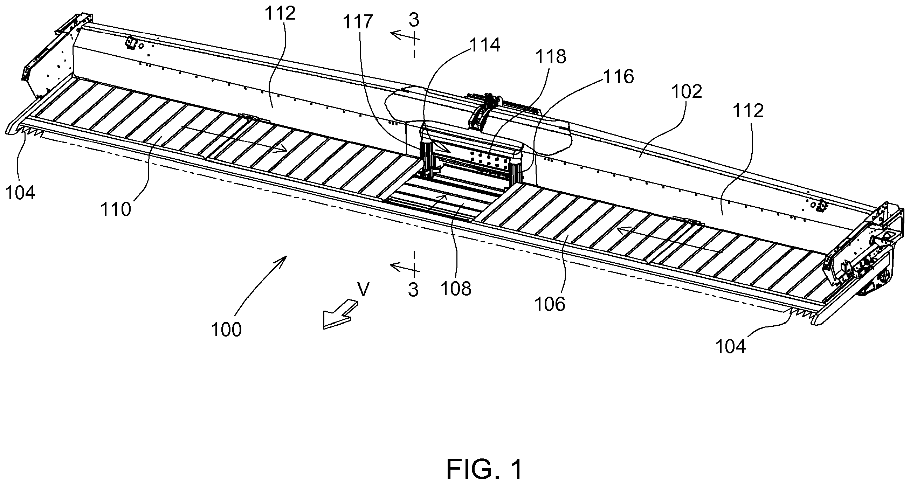

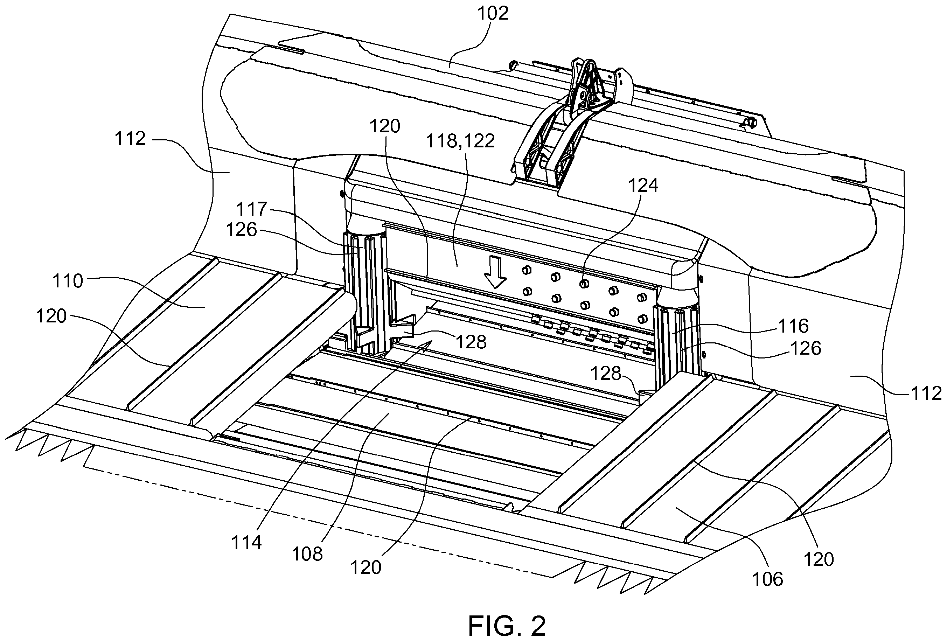

Figures 1 and 2 show a harvesting head 100. The harvesting head 100 comprises a frame 102 and a rear wall 112. The frame 102 supports the rear wall 112. The rear wall 112 has an aperture 114 passing therethrough from the front of the harvesting head 100 through to the rear of the harvesting head 100.

The harvesting head 100 further comprises a left side conveyor 106, a right side conveyor 110, and the center conveyor 108. The left conveyor 106, the right side conveyor 110, and the center conveyor 108 are all endless belt conveyors. Each conveyor is supported on at least two rollers (not shown) at least one of which is a drive roller that is driven in rotation by a motor. The conveyors convey crop material in the directions indicated by the arrows superimposed on the surfaces of the endless belts.

The harvesting head 100 further comprises a reciprocating knife 104 that is elongate, and extends across substantially the entire width of the harvesting head 100. The reciprocating knife 104 is fixed to a leading edge of the frame 102 and extends forward therefrom.

The harvesting head 100 further comprises a left side diverter roller 116 and a right side diverter roller 117 that are disposed on opposite sides of the center conveyor 108 where the rear edge of the endless belt of the center conveyor 108, and the rear edge of the endless belt of the right side conveyor 110 meets the left edge, and the right edge of the center conveyor 108.

The harvesting head 100 further comprises an upper conveyor 118 that is disposed above the center conveyor 108 in place of the traditional feed roller. The upper conveyor 118 is of the endless belt type and is disposed to engage the upper surface of cut crop material on the center conveyor 108 and compress it so it can be transmitted through the left side conveyor 106 and into the feederhouse (not shown) of the agricultural combine.

In operation, an agricultural combine (not shown) supports the harvesting head 100 on couplers that extend into the left side conveyor 106 to engage and support and right side diverter roller 117. The agricultural combine conveys the harvesting head 100 through the field in the direction "V" indicated in Figure 1. The direction "V" is perpendicular to the longitudinal extent of the harvesting head 100.

As the harvesting head 100 is carried to the field, the reciprocating knife 104 severs crop plants near the ground, causing the crop plants to fall rearward onto the upper surfaces of the endless belts of the left conveyor 106, the right side conveyor 110, and the center conveyor 108.

The cut crop material falling on the left side conveyor 106 is conveyed to a central region of the harvesting head 100. The cut crop material falls off the inner end of the left side conveyor 106 and onto the top surface of the endless belt of the center conveyor 108.

The cut crop material falling on the right side conveyor 110 is conveyed to the central region of the harvesting head 100. The cut crop material falls off the inner end of the right side conveyor 110 and onto the top surface of the endless belt of the center conveyor 108.

The cut crop material falling on the center conveyor 108 is carried rearward and toward the upper conveyor 118.

The left side diverter roller 116 extends vertically and is disposed at the inner rear corner of the left side conveyor 106. As cut crop material falls from the left side conveyor 106 onto the center conveyor 108 it is steered in a rearward direction by the action of the conveyor belts. The left side diverter roller is disposed in front of the rear wall 112 to assist the cut crop material as it rounds the corner and is propelled by the conveyor belts into the aperture 114. The left side diverter roller 116 is generally cylindrical, is supported in a vertical position and is permitted to rotate about a vertical axis extending to the longitudinal center of the left side diverter roller 116. Longitudinal and vertically extending ribs 126 are disposed on the outer surface of the left side diverter roller 116. The lower portion of the left side diverter roller 116 has a plurality of protrusions 128 that extend outwardly therefrom to a distance greater than an outward extent of the ribs 126. These protrusions 128 are distributed evenly about the circumference of the left side diverter roller 116.

The right side diverter roller 117 is constructed and functions in a manner identical to the left side diverter roller 116, but in mirror image form.

The upper conveyor 118 comprises an endless belt 122 that is disposed above the mat of cut crop material traveling rearwardly on the center conveyor 108. The endless belt 122 is a fabric-reinforced elastomer-impregnated belt. The endless conveyor belt may have a smooth outer surface, or it may be provided with a plurality of protrusions that extend outwardly therefrom. These protrusions may include laterally extending spaced apart ribs 120 and/or nubs 124.

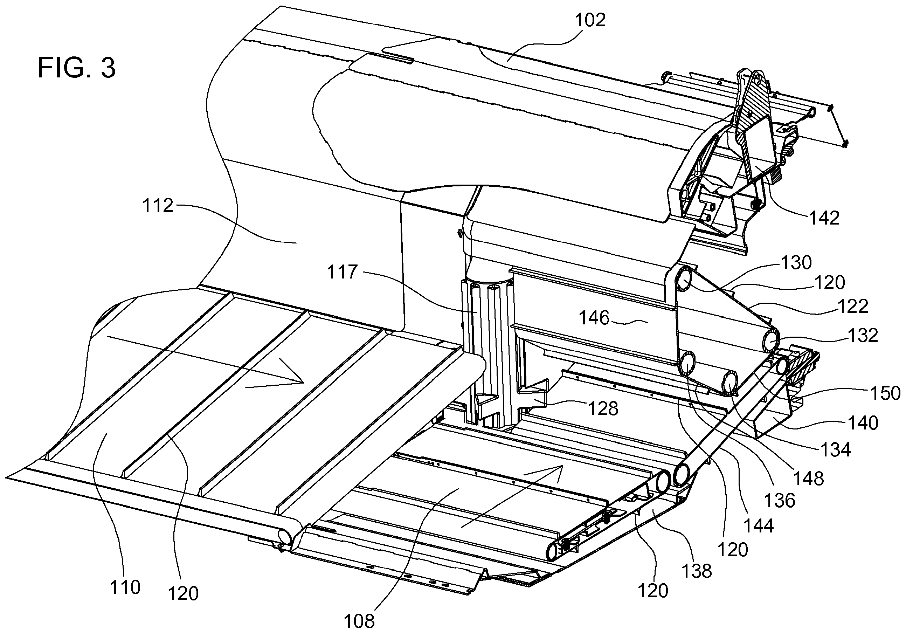

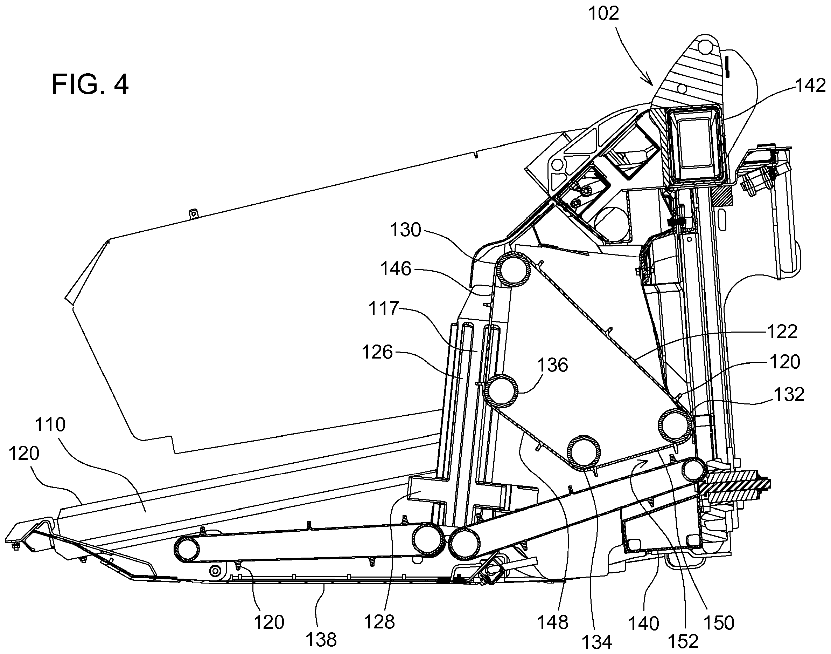

Figures 3 and 4 illustrate a cross-section of the harvesting head 100 taken along a longitudinal and vertical centerline of the harvesting head 100. The reciprocating knife 104 has been removed to show details otherwise obscured by the reciprocating knife 104.

From these figures it can be seen that the center conveyor 108 is supported on a front roller and a rear roller that are disposed above a floor pan 138. The endless belt of the center conveyor 108 recirculates about the front roller and the rear roller. The center conveyor 108 terminates adjacent to the rear wall 112.

Behind the center conveyor 108 is a second center conveyor 144 constructed essentially the same as the center conveyor 108.

The front roller of the second center conveyor 144 is disposed generally between the left side diverter roller 116 and the right side diverter roller 117, adjacent to the rear edge of the endless belt of the left side conveyor 106 and adjacent to the rear edge of the endless belt of the right side conveyor 110 and at the forward end of the endless belt of the upper conveyor 118.

The rear roller of the second center conveyor 144 is disposed generally between the left side diverter roller 116 and the right side diverter roller 117, adjacent to the rear end of the endless belt of the upper conveyor 118, at the rear of the harvesting head 100, and vertically between a lower beam member 140 of the frame 102 and an upper beam member 142 of the frame 102.

The second center conveyor 144 has an upper surface that receives cut crop material conveyed rearward from the center conveyor 108 and conveys it further rearward, underneath the upper conveyor 118.

The front roller and the rear roller of the second center conveyor 144 extend laterally, parallel to the longitudinal extent of the harvesting head 100. The front roller of the second center conveyor 144 is disposed generally at the same height as the rear roller of the center conveyor 108. In this manner, cut crop material conveyed rearward on the center conveyor 108 can be conveyed with little or no restriction from the center conveyor 108 to the second center conveyor 144.

The endless belt 122 of the upper conveyor 118 is supported on four rollers: an upper front roller 130, a lower rear roller 132, a lower compression roller 134 and an upper compression roller 136. At least one of these rollers is driven in rotation by a motor (not shown) of conventional arrangement. All of these rollers extend laterally generally parallel to the longitudinal extent of the harvesting head 100.

A belt portion 146 of the endless belt 122 is configured to move downwardly as it travels from the upper roller 130 to the upper compression roller 136. The belt portion 146 extends between (and is supported on and positionally defined by) the upper front roller 130 and the upper compression roller 136. The belt portion 146 extends generally vertically and the outer and crop engaging surface of the belt faces forwardly.

The belt portion 146 is disposed to engage the upper portion of the mat of cut crop material traveling on the center conveyor 108 and transitioning on to the second center conveyor 144 and to draw this upper portion of the mat downward with the spaced apart ribs 120. This slightly compresses the relatively fluffy mat of cut crop material.

A belt portion 148 of the endless belt 122 is configured to move downwardly and rearwardly as it travels from the upper compression roller 136 to the lower compression roller 134. The belt portion 148 extends between (and is supported on and positionally defined by) the upper compression roller 136 and the lower compression roller 134. The belt portion 148 extends in a downward and rearward direction. The crop engaging surface of the belt portion 148 faces forwardly and downwardly.

The belt portion 148 is disposed behind and below the belt portion 146, whereby it can engage the mat of cut crop material after it has been slightly compressed by the belt portion 146. The belt portion 148 moves downwardly and rearwardly as it travels from the upper compression roller 136 to the lower compression roller 134. This orientation a direction of travel permits the belt portion 148 to apply more pressure to the mat of cut crop material and thereby compress the mat of cut crop material even more. This downward and rearward orientation and movement of the belt portion 148 permits the web of the endless belt 122 as well as the spaced apart ribs 120 to apply compressive forces and frictionally engage the mat of cut crop material. The belt portion 148 compresses the mat of cut crop material between the endless belt 122 of the upper conveyor 118 and the endless belt of the second center conveyor 144. Both of these endless belts act in opposition to each other and the space between the endless belts narrows as the endless belts are drawn rearward.

A belt portion 150 of the endless belt 122 is configured to move rearwardly as it travels from the lower compression roller 134 to the lower rear roller 132. The belt portion 150 extends between (and is supported on and positionally defined by) the lower compression roller 134 and the lower rear roller 132.

The belt portion 150 and the crop engaging surface of the belt portion 150 extends generally horizontally and generally parallel to a crop engaging surface of a facing belt portion of the second center conveyor 144.

The belt portion 150 has a crop engaging surface that faces downwardly. A gap 152 is provided between the downwardly facing crop engaging surface of the belt portion 150 and the upwardly facing crop engaging surface of the endless belt of the second center conveyor 144.

As the endless belt of the second center conveyor 144 travels around the rear roller of the second conveyor 144 and as the endless belt of the upper conveyor 118 travels around the lower rear roller 132, the compressed crop material is released from between the two conveyors and is conveyed rearwardly as a thick, compressed mat into the opening of the feederhouse (not shown) on which the harvesting head 100 is supported.

In an alternative arrangement, the center conveyor 108 and the second center conveyor 144 can be configured differently and be provided with a single endless belt that recirculates between the front roller of the center conveyor 108 and the rear roller of the second center conveyor 144. In this manner, only a single belt would need replacement instead of two. Additionally, this would allow the rear roller of the center conveyor 108 and the front roller of the second center conveyor 144 to be eliminated.

## Claims

1. An agricultural harvesting head (100) comprising a frame (102) that extends laterally and is elongate; a left side conveyor (106) that is supported on a left side of the frame (102) and is configured to carry cut crop material laterally from a left side of the frame (102) to a central region of the frame (102); a right side conveyor (110) that is supported on a right side of the frame (102) and is configured to carry cut crop material laterally from a right side of the frame (102) to the central region of the frame (102); a center conveyor (108, 144) that is disposed to receive cut crop material from the left side conveyor (106) and from the right side conveyor (110) and to convey the cut crop material rearwardly, wherein the center conveyor (108, 144) is supported on the central region of the frame (102); and an upper conveyor (118) disposed to receive, engage and downwardly compress an upper surface of the cut crop material conveyed rearwardly by the center conveyor (108, 144), **characterized in that** the upper conveyor (118) is of an endless belt type and disposed above the center conveyor (108, 144).

2. The agricultural harvesting head (100) of Claim 1, wherein the left side conveyor (106), and the right side conveyor (110) are of the endless belt type.

3. The agricultural harvesting head (100) of Claim 1, further comprising a left side diverter roller (116) disposed adjacent to the left front of the upper conveyor (118) to deflect cut crop material from the left side conveyor (106) onto the center conveyor (108, 144), and further comprising a right side diverter roller (117) disposed adjacent to the right front of the upper conveyor (118) to deflect cut crop material from the right side conveyor (110) on to the center conveyor (108, 144).

4. The agricultural harvesting head (100) of Claim 1, wherein the upper conveyor (118) comprises an endless belt (122), and further wherein the endless belt (122) of the upper conveyor (118) has a generally vertical belt portion (146) that is configured to engage an upper portion of a mat of the cut crop material and draw the mat downward.

5. The agricultural harvesting head (100) of Claim 4, wherein the endless belt (122) of the upper conveyor (118) has a downwardly and rearwardly moving belt portion (148) that is configured to receive the mat of the cut crop material from the generally vertical belt portion (146) and further compress the mat of the cut crop material as it draws the mat of the cut crop material downward and rearward.

6. The agricultural harvesting head (100) of Claim 5, wherein the center conveyor (144) comprises an endless belt, and further wherein the mat of the cut crop material is compressed between the downwardly and rearwardly moving belt portion (148) and the endless belt of the center conveyor (144) as both the upper conveyor (118) and the center conveyor (144) are driven toward the rear of the agricultural harvesting head (100).

7. The agricultural harvesting head (100) of Claim 1, wherein a rearmost roller of the center conveyor (144) and a rearmost roller of the upper conveyor (118) are disposed at the rear of an inside the frame (102) of the agricultural harvesting head (100).

8. The agricultural harvesting head (100) of Claim 1, wherein an endless belt (122) of the upper conveyor (118) has three regions, including a first region that is generally vertical, a second region that extends downwardly and rearwardly, and a third region that extends generally horizontally, and further wherein these three regions are defined by a plurality of conveyor rollers (130, 132, 134, 136) about which the endless belt (122) of the upper conveyor (118) is wrapped.

9. The agricultural harvesting head (100) of Claim 3, wherein the left side diverter roller (116) and the right side diverter roller (117) each comprise an elongate body that is generally cylindrical and extends vertically, and a plurality of longitudinally extending ribs (126) that are fixed to and extend outward from an outer surface of the elongate body.

10. The agricultural harvesting head (100) of Claim 9, wherein the left side diverter roller (116) and the right side diverter roller (117) further comprise a plurality of elongate protrusions (128) extending outward from a lower portion of the elongate body.

## Patentansprüche

1. Landwirtschaftlicher Erntevorsatz (100), umfassend einen Rahmen (102), der sich seitlich erstreckt und länglich ist, eine linksseitige Fördereinrichtung (106), die an einer linken Seite des Rahmens (102) gestützt und dazu ausgestaltet ist, geschnittenes Erntegut seitlich von einer linken Seite des Rahmens (102) zu einem mittleren Bereich des Rahmens (102) zu tragen, eine rechtsseitige Fördereinrichtung (110), die an einer rechten Seite des Rahmens (102) gestützt und dazu ausgestaltet ist, geschnittenes Erntegut seitlich von einer rechten Seite des Rahmens (102) zu dem mittleren Bereich des Rahmens (102) zu tragen, eine mittlere Fördereinrichtung (108, 144), die angeordnet ist, um geschnittenes Erntegut von der linksseitigen Fördereinrichtung (106) und von der rechtsseitigen Fördereinrichtung (110) zu empfangen und das geschnittene Erntegut nach hinten zu befördern, wobei die mittlere Fördereinrichtung (108, 144) auf dem mittleren Bereich des Rahmens (102) gestützt ist, und eine obere Fördereinrichtung (118), die angeordnet ist, um eine obere Fläche des von der mittleren Fördereinrichtung (108, 144) nach hinten beförderten geschnittenen Ernteguts zu empfangen, in Eingriff zu nehmen und nach unten zusammenzudrücken, **dadurch gekennzeichnet, dass** die obere Fördereinrichtung (118) von einer Endlosriemenart ist und über der mittleren Fördereinrichtung (108, 144) angeordnet ist.

2. Landwirtschaftlicher Erntevorsatz (100) nach An-spruch 1, wobei die linksseitige Fördereinrichtung (106) und die rechtsseitige Fördereinrichtung (110) von der Endlosriemenart sind.

3. Landwirtschaftlicher Erntevorsatz (100) nach Anspruch 1, ferner umfassend eine linkssetige Umlenkrolle (116), die an der linken Vorderseite der obe-ren Fördereinrichtung (118) angrenzend angeordnet ist, um geschnittenes Erntegut von der linksseitigen Fördereinrichtung (106) auf die mittlere Fördereinrichtung (108, 144) abzulenken,
und ferner umfassend eine rechtsseitige Umlenkrolle (117), die an der rechten Vorderseite der oberen Fördereinrichtung (118) angrenzend angeordnet ist, um geschnittenes Erntegut von der rechtsseitigen Fördereinrichtung (110) auf die mittlere Fördereinrichtung (108, 144) abzulenken.

4. Landwirtschaftlicher Erntevorsatz (100) nach An-spruch 1, wobei die obere Fördereinrichtung (118) einen Endlosriemen (122) umfasst und ferner wobei der Endlosriemen (122) der oberen Fördereinrichtung (118) einen allgemein vertikalen Riemenabschnitt (146) hat, der dazu ausgestaltet ist, einen oberen Abschnitt einer Matte des geschnittenen Ernteguts in Eingriff zu nehmen und die Matte nach unten zu ziehen.

5. Landwirtschaftlicher Erntevorsatz (100) nach An-spruch 4, wobei der Endlosriemen (122) der oberen Fördereinrichtung (118) einen sich nach unten und nach hinten bewegenden Riemenabschnitt (148) hat, der dazu ausgestaltet ist, die Matte des geschnittenen Ernteguts von dem allgemein vertikalen Riemenabschnitt (146) zu empfangen und die Matte des geschnittenen Ernteguts ferner zusammenzudrücken, während er die Matte des geschnittenen Ernteguts nach unten und nach hinten zieht.

6. Landwirtschaftlicher Erntevorsatz (100) nach An-spruch 5, wobei die mittlere Fördereinrichtung (144) einen Endlosriemen umfasst und ferner wobei die Matte des geschnittenen Ernteguts zwischen dem sich nach unten und nach hinten bewegenden Riemenabschnitt (148) und dem Endlosriemen der mittleren Fördereinrichtung (144) zusammengedrückt wird, während sowohl die obere Fördereinrichtung (118) als auch die mittlere Fördereinrichtung (144) zu der Rückseite des landwirtschaftlichen Erntevorsatzes (100) hin getrieben werden.

7. Landwirtschaftlicher Erntevorsatz (100) nach An-spruch 1, wobei eine hinterste Rolle der mittleren Fördereinrichtung (144) und eine hinterste Rolle der oberen Fördereinrichtung (118) an der Rückseite eines innerhalb des Rahmens (102) des landwirtschaftlichen Erntevorsatzes (100) angeordnet sind.

8. Landwirtschaftlicher Erntevorsatz (100) nach An-spruch 1, wobei ein Endlosriemen (122) der oberen Fördereinrichtung (118) drei Bereiche hat, einschließlich eines ersten Bereichs, der allgemein vertikal ist, eines zweiten Bereichs, der sich nach unten und nach hinten erstreckt, und eines dritten Bereichs, der sich allgemein horizontal erstreckt, und ferner wobei diese drei Bereiche durch eine Vielzahl von Fördereinrichtungsrollen (130, 132, 134, 136) definiert sind, um die der Endlosriemen (122) der oberen Fördereinrichtung (118) gewickelt ist.

9. Landwirtschaftlicher Erntevorsatz (100) nach An-spruch 3, wobei die linksseitige Umlenkrolle (116) und die rechtsseitige Umlenkrolle (117) jeweils einen länglichen Körper umfassen, der allgemein zylindrisch ist und sich vertikal erstreckt, sowie eine Vielzahl von sich in Längsrichtung erstreckenden Rippen (126), die an einer Außenfläche des länglichen Körpers befestigt sind und sich von dieser nach außen erstrecken.

10. Landwirtschaftlicher Erntevorsatz (100) nach An-spruch 9, wobei die linksseitige Umlenkrolle (116) und die rechtsseitige Umlenkrolle (117) ferner eine Vielzahl von länglichen Vorsprüngen (128) umfassen, die sich von einem unteren Abschnitt des länglichen Körpers nach außen erstrecken.

## Revendications

1. Tête de récolte agricole (100) comprenant un cadre (102) qui s'étend latéralement et qui est allongé ; un convoyeur gauche (106) qui est supporté sur un côté gauche du cadre (102) et qui est configuré pour porter les matières de récolte coupées latéralement depuis un côté gauche du cadre (102) jusqu'à une région centrale du cadre (102) ; un convoyeur droit (110) qui est supporté sur un côté droit du cadre (102) et qui est configuré pour porter les matières de récolte coupées latéralement depuis un côté droit du cadre (102) jusqu'à la région centrale du cadre (102) ; un convoyeur central (108, 144) qui est disposé de manière à recevoir des matières de récolte coupées provenant du convoyeur gauche (106) et du convoyeur droit (110) et pour transporter vers l'arrière des matières de récolte coupées, le convoyeur central (108, 144) étant supporté sur la région centrale du cadre (102) ; et un convoyeur supérieur (118) disposé de manière à recevoir, venir en prise avec, et comprimer vers le bas une surface supérieure des matières de récolte coupées transportées vers l'arrière par le convoyeur central (108, 144), **caractérisée en ce que** le convoyeur supérieur (118) est du type à courroie sans fin et est disposé au-dessus du convoyeur central (108, 144).

2. Tête de récolte agricole (100) selon la revendication 1, dans laquelle le convoyeur gauche (106) et le convoyeur droit (110) sont du type à courroie sans fin.

3. Tête de récolte agricole (100) selon la revendication 1, comprenant en outre un rouleau déflecteur gauche (116) disposé à côté de la partie avant gauche du convoyeur supérieur (118) pour dévier des matières de récolte coupées provenant du convoyeur gauche (106) jusque sur le convoyeur central (108, 144), et comprenant en outre un rouleau déflecteur droit (117) disposé à côté de la partie avant droite du convoyeur supérieur (118) pour dévier les matières de récolte coupées provenant du convoyeur droit (110) jusque sur le convoyeur central (108, 144).

4. Tête de récolte agricole (100) selon la revendication 1, dans laquelle le convoyeur supérieur (118) comprend une courroie sans fin (122), et en outre dans lequel la courroie sans fin (122) du convoyeur supérieur (118) présente une portion de courroie généralement verticale (146) qui est configurée pour venir en prise avec une portion supérieure d'un tapis des matières de récolte coupées et pour tirer ce tapis vers le bas.

5. Tête de récolte agricole (100) selon la revendication 4, dans laquelle la courroie sans fin (122) du convoyeur supérieur (118) présente une portion de courroie se déplaçant vers le bas et vers l'arrière (148), qui est configurée pour recevoir le tapis des matières de récolte coupées provenant de la portion de courroie généralement verticale (146) et pour comprimer en outre le tapis des matières de récolte coupées à mesure qu'elle tire le tapis des matières de récolte coupées vers le bas et vers l'arrière.

6. Tête de récolte agricole (100) selon la revendication 5, dans laquelle le convoyeur central (144) comprend une courroie sans fin, et dans laquelle en outre le tapis des matières de récolte coupées est comprimé entre la portion de courroie se déplaçant vers le bas et vers l'arrière (148) et la courroie sans fin du convoyeur central (144) à mesure que le convoyeur supérieur (118) et le convoyeur central (144) sont tous deux entraînés vers l'arrière de la tête de récolte agricole (100).

7. Tête de récolte agricole (100) selon la revendication 1, dans laquelle un rouleau le plus en arrière du convoyeur central (144) et un rouleau le plus en arrière du convoyeur supérieur (118) sont disposés à l'arrière d'un à l'intérieur du cadre (102) de la tête de récolte agricole (100) .

8. Tête de récolte agricole (100) selon la revendication 1, dans laquelle une courroie sans fin (122) du convoyeur supérieur (118) présente trois régions, incluant une première région qui est généralement verticale, une deuxième région qui s'étend vers le bas et vers l'arrière, et une troisième région qui s'étend généralement horizontalement, et en outre dans laquelle ces trois régions sont définies par une pluralité de rouleaux de convoyeur (130, 132, 134, 136) autour desquels est enveloppée la courroie sans fin (122) du convoyeur supérieur (118).

9. Tête de récolte agricole (100) selon la revendication 3, dans laquelle le rouleau déflecteur gauche (116) et le rouleau déflecteur droit (117) comprennent chacun un corps allongé qui est généralement cylindrique et qui s'étend verticalement, et une pluralité de nervures s'étendant longitudinalement (126), qui sont fixées à une surface extérieure du corps allongé et s'étendent vers l'extérieur depuis celle-ci.

10. Tête de récolte agricole (100) selon la revendication 9, dans laquelle le rouleau déflecteur gauche (116) et le rouleau déflecteur droit (117) comprennent en outre une pluralité de saillies allongées (128) s'étendant vers l'extérieur depuis une portion inférieure du corps allongé.
